# FASCICULE DE BREVET EUROPEEN

(11) **EP 2 144 847 B1**
(45) Date de publication et mention de la délivrance du brevet: **10.04.2019**
(21) Numéro de dépôt: 08805738.5
(22) Date de dépôt: 02.05.2008
(51) Int. Cl.: C01B 3/06, H01M 8/06

(54) **PROCÉDÉ POUR LA FOURNITURE DU DIHYDROGÈNE À PARTIR DE SILICIUM HYDROGÉNÉ**
VERFAHREN ZUR HERSTELLUNG VON DIHYDROGEN AUS HYDRIERTEM SILICIUM
METHOD FOR PRODUCING DIHYDROGEN FROM HYDROGENATED SILICON

(30) Priorité: 04.05.2007 FR 0754866
(43) Date de publication de la demande: 20.01.2010
(73) Titulaire: Centre National de la Recherche Scientifique (C.N.R.S.), 75016 Paris (FR); Université de Franche-Comté, 25030 Besançon Cedex (FR)
(72) Inventeur: GAUTHIER-MANUEL, Bernard, F-25000 Besancon (FR)
(74) Mandataire: Lavoix
(86) Numéro de dépôt international: PCT/FR2008/050784
(87) Numéro de publication internationale: WO 2008/148988

(56) Documents cités:
- WO-A-2004/052774
- WO-A-2007/019172
- DE-A1- 19 954 513
- FR-A- 2 858 313
- JP-A- 59 045 901

## Description

L'invention concerne un procédé pour la fabrication de dihydrogène, utile notamment dans les piles à combustible fonctionnant au dihydrogène.

La production de dihydrogène passe actuellement par une étape préalable de stockage. Or, le stockage du dihydrogène en tant que vecteur énergétique est l'une des limitations au développement ou à la miniaturisation des piles à combustible.

Ainsi, il est connu de stocker directement le dihydrogène dans des réservoirs cryogéniques ou sous pression. Ce système de stockage suppose l'utilisation de matériels de stockage non transposables dans les domaines nécessitant l'utilisation de dispositifs portables, tels que la téléphonie mobile. De plus, les réservoirs cryogéniques sont pénalisés par le mauvais rendement du procédé de liquéfaction du dihydrogène. Les réservoirs sous pression posent, quant à eux, un problème de sécurité.

D'autres alternatives proposent de stocker le dihydrogène sous une autre forme puis de le restituer. La première consiste à utiliser des combustibles intermédiaires, tel que le méthanol, pour engendrer du dihydrogène. Cependant, bien que ces piles soient assez faciles à mettre en oeuvre, elles présentent un mauvais rendement et une certaine toxicité due au dégagement de gaz carbonique. La seconde consiste à stocker le dihydrogène à pression atmosphérique en utilisant des hydrures métalliques solides ou des nanotubes de carbones, mais leur faible capacité de production de dihydrogène et la nécessité de fournir de l'énergie pour désorber le dihydrogène ne les rendent pas intéressants.

Il est aussi connu de générer chimiquement du dihydrogène à partir de la décomposition de borohydrure de sodium en milieu alcalin. Cette méthode présente l'inconvénient de devoir utiliser un catalyseur pour fonctionner à température ambiante.

Par ailleurs, FR 2 858 313 mentionne la possibilité de produire du dihydrogène en utilisant du silicium poreux anodisé par de l'acide fluorhydrique sous pression atmosphérique. Le dihydrogène est ensuite libéré par apport d'énergie dont l'énergie chimique par contact avec l'éthanol. Un inconvénient de cette variante est la nécessité de recharger le système en acide fluorhydrique pour régénérer le silicium poreux.

JP59 045901 montre un procédé de production d'hydrogène par réaction de SiH2 en poudre avec une solution aqueuse d'hydroxyde de sodium.

Un but de la présente invention est de fournir une méthode permettant de produire efficacement du dihydrogène au besoin, sans avoir à mettre en oeuvre les étapes de stockage ni de restitution du type précité.

A cet effet, selon un premier aspect, la présente invention a pour objet, un procédé destiné à la fabrication de dihydrogène, comportant une étape de mise en contact d'un silicium hydrogéné avec une solution alcaline, (ce par quoi on génère du dihydrogène, et une étape de récupération et/ou de valorisation du dihydrogène ainsi formé. Le silicium hydrogéné utilisé est obtenu par traitement électrochimique d'un substrat de silicium avec un acide. Plus généralement, la présente invention a pour objet l'utilisation d'un silicium hydrogéné pour fournir du dihydrogène destiné à être récupéré et/ou valorisé, où le silicium hydrogéné est mis en contact avec une solution alcaline.

Selon l'invention, on met en oeuvre une réaction d'une solution alcaline sur un silicium hydrogéné, telle que définie dans la revendication 1.

La solution alcaline réagit sur la couche silicium-hydrogène libérant ainsi du dihydrogène tout en formant une nouvelle couche de silicium-hydrogène à la surface du substrat de silicium, notamment du substrat de silicium poreux.

La fabrication de dihydrogène selon l'invention peut être schématiquement résumée par la réaction (**I**) suivante :

-Si-Si-H + 4H₂O -> -Si-H + Si(OH)₄ + 2H₂ (**I**)

Un avantage de l'utilisation de la réaction précitée est de permettre la fabrication du dihydrogène en une seule étape.

De plus, comme illustré ci-dessus la réaction (I) induit, dans le même temps, une réactivation du silicium en reformant des liaisons silicium-hydrogènes en surface. Sur cette base, le dihydrogène peut être produit à nouveau à la demande par une nouvelle mise en oeuvre de la réaction (I).

En outre, grâce à l'utilisation de la réaction selon l'invention, le dihydrogène est fourni sans avoir à recourir à une étape de stockage préalable à la restitution.

Par « silicium hydrogéné », on entend un substrat de silicium hydrogéné, cette hydrogénation étant obtenue par traitement électrochimique du substrat de silicium avec un acide. Le substrat de silicium est généralement une plaque de silicium. Ce substrat contient de préférence au plus 10¹⁹cm⁻³ atomique d'impuretés telles que le bore ou le phosphore, par exemple.

Le silicium hydrogéné utilisé selon l'invention se présente sous forme d'un matériau massif présentant typiquement au moins une dimension supérieure à au moins 0,5 mm, notamment à 1 mm, de préférence à 1 cm. La notion de "matériau massif" au sens de la présente description vise un matériau solide macroscopique de type manipulable, tel qu'une plaque (ayant avantageusement une épaisseur d'au moins 0,5 mm, notamment d'au moins 1 mm et des largeurs et longueurs de l'ordre du centimètre au moins) ou un cylindre (ayant avantageusement une longueur d'au moins 5 mm et un diamètre d'au moins 0,5 mm, notamment 1 mm). Ainsi, dans un matériau massif au sens de la présente description, le silicium est généralement hydrogéné sur sa surface uniquement, le coeur du matériau étant le plus souvent essentiellement constitué de silicium. La définition d'un matériau massif au sens de la présente description exclut les matériaux de silicium hydrogéné supportés à l'état de couche d'épaisseur inférieure à 1 mm, notamment inférieure à 0,5mm, et les particules de silicium hydrogéné de dimension inférieure à 1 mm, notamment inférieure à 0,5mm, sous forme dispersée.

Le silicium hydrogéné employé dans le cadre de l'invention est de préférence poreux. Suivant un mode de réalisation préféré, le silicium poreux hydrogéné employé est constitué de silicium mésoporeux, à savoir comportant des pores de taille comprise entre 2 et 50 nm (mésopores) et/ou microporeux, à savoir comportant des pores de taille inférieure à 2nm (micropores).

La présence de pores (mésopores et/ou micropores notamment) permet, entre autres, d'augmenter la surface spécifique du substrat de silicium engendrant, pour un volume donné, une quantité plus importante de dihydrogènes présents à la surface du silicium poreux hydrogéné. La porosité du silicium hydrogéné est comprise entre environ 10 % et environ 70 % en volume. La porosité en volume précitée correspond au rapport entre le volume des pores présents dans l'échantillon et le volume de l'échantillon. Cette porosité est déterminée, par exemple, par le calcul de l'indice de réfraction du silicium poreux à partir d'une mesure de réflectométrie optique, ou bien par la pesée en comparant les masses de l'échantillon avant et après l'anodisation.

La surface spécifique du silicium hydrogéné est comprise entre environ 200 m².cm⁻³ et environ 900 m².cm⁻³. Cette surface spécifique peut, par exemple, être déterminée par la méthode BET lorsque le silicium hydrogéné est en quantité suffisante. La méthode BET précitée est la méthode de BRUNAUER-TELLER décrite notamment dans The Journal of the American Chemical Society, volume 60, page 309, fev 1938 et correspondant à la norme internationale ISO 5794/1. La surface spécifique d'un silicium hydrogéné peut, plus généralement, être déterminée par quantification de la masse d'une monocouche de silane auto-assemblée sur la surface du silicium poreux à caractériser.

Dans le procédé de l'invention, la quantité de dihydrogène disponible par unité de temps dépend de la surface spécifique, et aussi de la quantité de silicium présent. Typiquement, la production d'hydrogène est de l'ordre de 0,16 litre par gramme de Si et par minute.

Le silicium hydrogéné employé selon l'invention est obtenu par traitement électrochimique d'un substrat de silicium avec un acide, cet acide étant avantageusement l'acide fluorhydrique.

Le substrat de silicium utilisé dans la présente invention est par exemple un substrat standard de la microélectronique, tel qu'un silicium dopé phosphore, de résistivité typiquement de l'ordre de 0,016 Ω.cm, ou un silicium dopé bore, de résistivité par exemple de l'ordre de 0,005 Ω.cm. Le substrat de silicium utilisé comporte au plus une concentration atomique d'impuretés égale à environ à 10¹⁹ cm⁻³. Un tel traitement permet de porosifier le substrat de silicium et, dans le même temps, de créer une première couche de Si-Hₓ, avec x=1,2 ou 3, à la surface du substrat de silicium porosifié.

Dans un mode de réalisation, le traitement électrochimique est une anodisation électrochimique qui est de préférence effectuée sur un substrat de silicium monocristallin, polycristallin ou amorphe. Après le traitement électrochimique, le substrat de silicium est devenu à la fois mésoporeux et/ou microporeux et hydrogéné.

Le silicium hydrogéné comporte en général des nano-cristallites et/ou des nano-particules de silicium de diverses formes géométriques, interconnectés ou non entre elles, dont au moins une dimension est inférieure ou égale à environ 100 nm et dont la somme des surfaces de chaque cristallite et/ou de nano-particule est plus grande que la surface planaire occupée par le silicium hydrogéné.

Selon une variante, le silicium hydrogéné est broyé, et éventuellement compacté, permettant ainsi un emploi aisé dans un dispositif utilisant du dihydrogène, tel qu'une pile à combustible.

Après le traitement électrochimique, tout ou partie de la surface du substrat de silicium, notamment du substrat de silicium poreux, comporte des groupements siliciums liés à des hydrogènes, -Si-H de surface, propres à la mise en oeuvre de la réaction (I) précitée.

Dans le procédé de l'invention, la température de réaction de la solution alcaline sur le silicium hydrogéné est en général comprise entre environ 10°C et environ 40°C, de préférence cette température est conduite à température ambiante. La réaction se fait de préférence à pression atmosphérique ou à des pressions légèrement plus élevées, généralement inférieures ou égales à environ 2 bars, comprises entre environ 1 bar et 1,5 bars.

La solution alcaline utilisée dans le procédé de l'invention est de préférence une solution alcaline aqueuse. Le pH de la solution alcaline est compris notamment entre environ 9 et environ 14, de préférence entre environ 9 et 13, par exemple de l'ordre de 10. La base peut être choisie notamment parmi NaOH, KOH, et NH₄OH. De manière préférée, la solution alcaline aqueuse est une solution aqueuse de NaOH et/ou KOH.

Un avantage du procédé de l'invention est que la totalité du substrat de silicium est disponible pour réagir avec la solution alcaline et ainsi générer le dihydrogène, contrairement à l'alternative proposée dans la demande FR 2 858 313 où c'est uniquement la surface du matériau qui est utilisée pour stocker le dihydrogène. La capacité de production en dihydrogène s'avère donc plus importante dans le procédé selon l'invention. En particulier, le procédé selon l'invention permet de former deux moles de dihydrogène par mole de silicium hydrogéné, soit environ 1,6 I de dihydrogène par gramme de silicium hydrogéné à pression atmosphérique et température ambiante.

Un autre avantage du procédé de l'invention est qu'il ne comporte qu'une seule étape pour produire le dihydrogène, engendrant ainsi un coût de production plus faible que celui des dispositifs nécessitant deux étapes ou plus, qui utilisent généralement des composés intermédiaires souvent onéreux.

De préférence, le procédé selon l'invention comporte en outre une étape de récupération et de valorisation du dihydrogène, par exemple l'utilisation du dihydrogène comme combustible.

Selon un deuxième aspect, l'invention porte sur une pile à combustible comprenant une anode fonctionnant au dihydrogène associée à un dispositif de fourniture de dihydrogène à partir de silicium hydrogéné, ce dispositif comportant du silicium hydrogéné mis en contact avec une solution alcaline générant le dihydrogène à partir de silicium hydrogéné en mettant en oeuvre le procédé selon l'invention.

Le silicium hydrogéné mis en contact avec la solution alcaline permet, comme illustré à l'équation (**I**), d'engendrer deux équivalents de dihydrogène en régénérant une liaison silicium-hydrogène à la surface du substrat de silicium.

Un avantage du procédé selon l'invention est de régénérer *in situ,* lors du fonctionnement de la pile, le silicium hydrogéné. De ce fait, à quantité de silicium identique, la quantité de dihydrogène disponible est supérieure à celle d'un dispositif ne comportant que du dihydrogène chimisorbé à la surface du substrat de silicium, notamment du substrat de silicium poreux Le temps de fonctionnement de la pile dépend donc de la quantité de substrat de silicium qui a été introduit initialement.

De préférence, à titre de dispositif de fourniture de dihydrogène pour l'alimentation de l'anode, la pile comprend un réservoir comprenant :
- un premier compartiment rempli en partie ou en totalité par du silicium hydrogéné, ce premier compartiment étant généralement séparé en deux zones, à savoir une première zone comportant le silicium hydrogéné et une seconde zone mise en contact avec l'anode et destinée à recevoir le dihydrogène formé, et
- un second compartiment rempli en tout ou partie par une solution alcaline, les premier et second compartiments communiquant de telle sorte que la solution alcaline peut venir en contact avec le silicium hydrogéné. Selon un mode préférentiel, le réservoir est de type interchangeable et il joue donc le rôle à la fois de système de chargement de silicium hydrogéné et de système de chargement de la solution alcaline.

Selon un mode de réalisation, le dispositif de fourniture de dihydrogène de la pile à combustible comporte un système de chargement de silicium hydrogéné. Ce système permet une introduction initiale du silicium hydrogéné. Par ailleurs, du silicium hydrogéné additionnel peut être réintroduit dans le dispositif de fourniture d'hydrogène de la pile via ce système de chargement, lorsque le substrat de silicium initialement présent est entièrement consommé ou bien lorsqu'il est consommé au-delà d'un certain seuil, par exemple au-delà de 75%, voire 85%, mieux encore 95 % de substrat de silicium poreux hydrogéné initialement présent. Le système de chargement du silicium hydrogéné peut être un système de chargement externe, ou un système permettant l'échange d'une cartouche contenant le silicium hydrogéné.

Selon un mode de réalisation généralement associé au précédent, la pile à combustible comprend en outre un système de chargement de la solution alcaline au niveau du dispositif de fourniture de dihydrogène. Ce système de chargement permet d'introduire initialement la solution alcaline, et de la régénérer au cours de la vie de la pile, notamment pour la réapprovisionner en composant basique. Ce système de chargement de la solution alcaline permettant à la pile de fonctionner peut notamment être externe.

Le silicium poreux et la solution alcaline, en quantité suffisante pour hydrolyser le silicium poreux, sont typiquement contenus dans un récipient amovible, par exemple une cartouche pouvant s'encliqueter de manière hermétique à la pile à combustible.

Selon un autre mode de réalisation, la solution alcaline est contenue dans un récipient amovible distinct du système de chargement du silicium hydrogéné et son remplacement permet à la pile de continuer à fonctionner.

Selon encore un autre mode de réalisation, le récipient amovible, par exemple la cartouche, comporte un premier compartiment comprenant le silicium hydrogéné et un deuxième compartiment contenant la solution alcaline. Les deux compartiments sont généralement séparés par un système de séparation empêchant le passage du silicium hydrogéné du premier compartiment vers le deuxième compartiment, mais permettant néanmoins à au moins une partie de la solution alcaline de circuler du deuxième compartiment vers le premier pour se mettre en contact avec tout ou partie du silicium hydrogéné. Ce système de séparation est typiquement une grille.

Le plus souvent, la cathode de la pile fonctionne au dioxygène. Selon ce mode de réalisation, l'anode et la cathode comportent de préférence un milieu diffusant le dihydrogène et le dioxygène, ainsi qu'un catalyseur et un conducteur protonique.

Le milieu diffusant est aussi un conducteur électronique et est par exemple constitué de fibres de carbone tissées dans lesquelles sont incluses des particules de graphite poreuses. Les molécules de gaz passent dans ce cas au travers de la maille des fibres tissées et les électrons sont véhiculés par les fibres de carbone. Selon un autre mode de réalisation, il est aussi constitué d'un polymère réticulé perméable aux gaz tels que le PDMS (polydiméthysiloxane) chargé avec des particules de graphite poreuses.

Le catalyseur est constitué de platine finement divisé incorporé dans les particules de graphite poreuse.

Selon un mode de réalisation, le catalyseur est constitué de nanoparticules de platine (typiquement de dimensions comprises entre 2 et 50 nm) recouvertes de molécules conductrices de protons par greffage chimique et dispersées dans une matrice, telle que le PDMS, perméable à l'eau et aux gaz à une concentration supérieure au seuil de percolation afin de permettre la conductivité électronique et protonique.

Le conducteur protonique est par exemple un ionomère tel que le Nafion® ou bien est constitué par des molécules portant des groupements identiques à celles utilisées pour réaliser la membrane et greffées à la surface des grains du catalyseur. Le conducteur protonique est ici une molécule ou macromolécule comportant au moins un groupe susceptible de capter puis de libérer un proton afin que ce dernier circule dans le générateur. Le groupe susceptible de capter, puis de libérer un proton est choisi parmi les groupes sulfonate (-SO₃⁻) ou carboxylate (-COO⁻). En particulier, il est avantageux d'utiliser une molécule ou macromolécule comportant un squelette fluoré, ce qui permet notamment d'accroître la mobilité des protons.

Le dioxygène provient, par exemple, d'une réserve constituée d'air, de préférence de l'air enrichi, d'une réserve comportant du dioxygène pur ou de l'air ambiant. Le dioxygène est transporté, par exemple, à l'aide d'un tuyau ou équivalent de la réserve vers la cathode. A ce titre, la cathode est munie d'un orifice par lequel le tuyau ou équivalent est attaché.

Le fonctionnement global de la pile est résumé par la réaction suivante :

2H₂ + O₂ → 2H₂O (**II**)

Dans la mesure où la réaction de fabrication du dihydrogène (**I**) consomme quatre équivalents de molécules d'eau et la réaction de fonctionnement de la pile (**II**) en produit deux, l'eau produite peut être recyclée partiellement ou entièrement lors du fonctionnement de la pile. De préférence, l'eau est réutilisée pour réagir sur la couche de silicium-hydrogène résolvant de ce fait, le problème lié à la production d'eau. Les deux derniers équivalents de molécules d'eau manquants sont, selon un mode de réalisation préféré, fournis par l'eau présente dans la solution alcaline aqueuse. A cet effet, la pile comprend typiquement des moyens d'amenée de l'eau produite par la réaction (**II**) au niveau de la solution alcaline aqueuse, typiquement un tuyau. Un système de chargement externe en composé alcalin contenu dans la solution alcaline aqueuse permet alors à la pile d'avoir une concentration constante en composé alcalin et donc de maintenir le pH constant malgré l'apport d'eau recyclée.

La pile présente ainsi l'avantage d'être autorégulable. En effet, la pression locale en dihydrogène à l'interface solution alcaline/silicium hydrogéné dépend de la quantité de dihydrogène présente dans le compartiment anodique de la pile. Lors d'une interruption du courant électrique, la consommation en dihydrogène cesse ce qui augmente la pression. L'augmentation résultante de la pression repousse alors le niveau de la solution alcaline au-dessous du niveau où se situe le substrat de silicium, notamment le substrat de silicium poreux. La réaction de production du dihydrogène est ainsi arrêtée. De même, en présence d'un courant électrique, la pression dans le compartiment anodique décroît aspirant la solution alcaline au contact du substrat de silicium, notamment le substrat de silicium poreux. De ce fait, la production de dihydrogène est réactivée.

La pression de stockage maximale en dihydrogène est comprise entre environ 0,1 et environ 1 bar, voire entre environ 0,5 bar et environ 0,9 bar. La pression est selon un mode de réalisation égale à environ 800 mbars.

Par ailleurs, la pile comporte un milieu diffusant permettant au dioxygène et au dihydrogène de diffuser, à l'énergie électronique d'être récupérée et à l'eau d'être recyclée. Selon un mode de réalisation, le milieu diffusant est constitué de tissu de graphite, par exemple tel que celui commercialisé par la société E-tek.

La pile peut comporter une membrane, par exemple une membrane en silicium poreux dont la surface interne est greffée chimiquement avec des conducteurs protoniques, notamment des molécules portant au moins un groupement sulfonate (-SO₃⁻) ou carboxylate (-COO⁻).

Selon un autre mode de réalisation, la membrane est constituée de silicium poreux dont les pores sont remplis par un ionomère tel que le Nafion®. La membrane conduit les protons résultant du fonctionnement de la pile mais est imperméable au dihydrogène et au dioxygène gazeux.

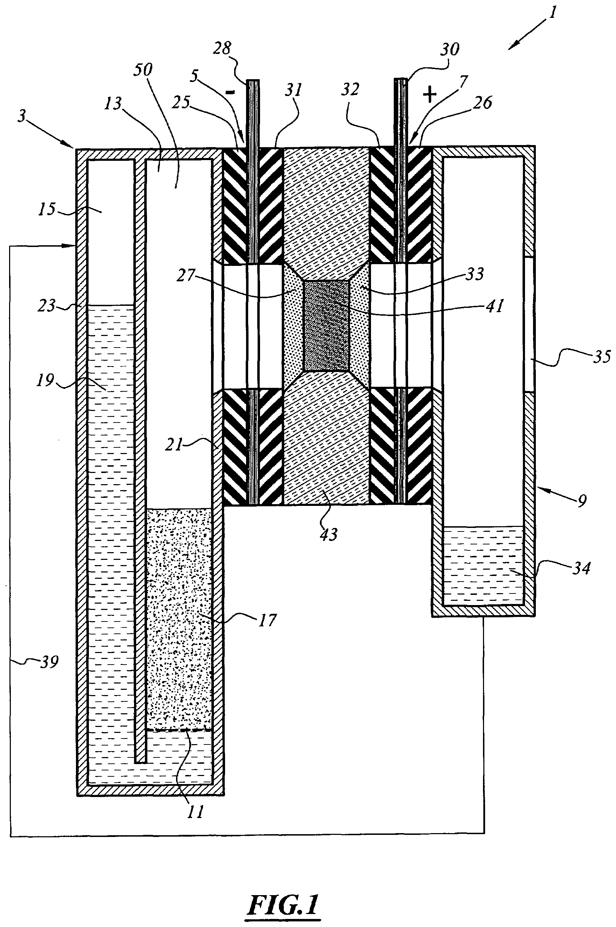

L'invention sera encore davantage illustrée à la lecture de l'exemple non limitatif qui va suivre faite en référence à la figure unique ci-annexée.

La figure est un mode de réalisation d'un générateur de dihydrogène conforme à l'invention.

La figure décrit une pile 1 comportant un dispositif de fourniture de dihydrogène qui est un réservoir interchangeable 3 adjacent à une partie anodique 5. La pile 1 comporte en outre une partie cathodique 7 adjacente à un récipient de récupération d'eau 9.

Le réservoir interchangeable 3 est un récipient amovible à section en U, ou analogue, par exemple une cartouche. Le réservoir interchangeable 3 comporte un premier compartiment 13 (schématiquement dans une première branche de la section en U) et un deuxième compartiment 15, (schématiquement dans l'autre branche de la section en U), séparés par une grille 11. Le premier compartiment 13 du réservoir interchangeable 3 est rempli avec du silicium poreux hydrogéné 17 reposant sur la grille 11. Le silicium poreux hydrogéné 17 est typiquement obtenu par anodisation d'une plaque de silicium dopé au bore de résistivité égale à environ 0.0012 Ω.cm et d'épaisseur égale à environ 500 µm dans un bain composé d'un mélange 1:1 d'acide fluorhydrique à environ 48% et d'éthanol pur. L'anodisation réalisée avec une densité de courant égale à environ 100 mA.cm⁻² produit des pores d'environ 20 nm de diamètre à une vitesse d'environ 200 nm.s⁻¹. La totalité du silicium est anodisée en environ 2500 s.

Le deuxième compartiment 15 du récipient interchangeable 3 est partiellement ou, dans certains cas, totalement rempli avec une solution NaOH 19 à 0,0001 mol.1⁻¹.

La paroi 21 du premier compartiment 13 contenant le silicium poreux hydrogéné 17 est en connexion fluide avec la partie anodique 5, un joint 25 assurant une étanchéité vis-à-vis du milieu extérieur.

La paroi 23 du deuxième compartiment 15 comporte une soupape (non représentée) permettant la mise à la pression atmosphérique du deuxième compartiment 15.

La partie anodique 5 comporte une borne négative 28. La borne positive 28 est entourée par le joint 25 et par un joint conducteur 31 conduisant les électrons. La partie anodique 5 comporte également une anode 27 accolée au joint conducteur d'électricité 31 et constituée, par exemple, d'un tissu de carbone recouvert sur la face interne de poudre de graphite renfermant le catalyseur de platine.

La réaction se produisant à l'anode 27 est la réaction (II) :

II H₂ →2H⁺+2e⁻

La partie cathodique 7 comporte une borne positive 30. La borne positive 30 est entourée par un joint 26 et un deuxième joint conducteur d'électricité 32 conduisant les électrons. La partie cathodique 7 comporte également une cathode 33 accolée au deuxième joint conducteur d'électricité 32 et constituée, par exemple, d'un tissu de carbone recouvert sur la face interne de poudre de graphite renfermant le catalyseur de platine.

La réaction chimique se produisant à la cathode 33 est la réaction (III) usuelle :

III 2H⁺+1/2O₂+2e⁻ → H₂O

En outre, la partie cathodique 7 est connectée, par l'intermédiaire du joint 26, au récipient de récupération d'eau 9 permettant de récupérer l'eau 34 produite lors le fonctionnement de la pile.

Les bornes négative et positive 28 et 30 permettent la délivrance du courant et constituent, en association, une prise de courant.

Le récipient de récupération 9 comporte également une fenêtre polymérique 35 en Téflon® perméable au dioxygène. La fenêtre polymérique 35 peut être dans une variante du PDMS.

Un circuit de recyclage 39 placé en sortie du récipient de récupération 9 pour relier le deuxième compartiment 15 du réservoir interchangeable 3 permet d'utiliser l'eau 34 pour alimenter la solution NaOH 19 pour générer du dihydrogène dans le réservoir interchangeable 3.

La pile 1 est de type PEM (Proton Exchange Membrane) et comporte donc une membrane 41, pouvant être constituée de silicium poreux. Dans ce cas, il s'agit en général d'un silicium poreux, rendu conducteur protonique soit par imprégnation avec une solution d'ionomère (Nafion®) soit par greffage de molécules. A noter que le silicium poreux de la membrane 41 n'est pas mis en oeuvre pour la fabrication du dihydrogène. En fait, il ne s'agit pas de silicium hydrogéné.

La membrane 41 permet de séparer l'anode 27 et la cathode 33 qui sont collées avec une solution de Nafion® sur une membrane 43 isolante électriquement. Par ailleurs, un cadre isolant (non représenté) en silicium oxydé entoure la membrane 43, l'anode 27 et la cathode 33 afin de ne pas perdre de courant.

En fonctionnement, la solution NaOH 19 contenue dans le deuxième compartiment 15 vient en contact du silicium poreux hydrogéné 17 contenu dans le premier compartiment 13 au travers de la grille 11. Le dihydrogène est ainsi produit selon la réaction (I) :

-Si-Si-H + 4H₂O → -Si-H + Si(OH)₄ + 2H₂ (I)

Le dihydrogène, une fois formé, remplit la zone 50 située au dessus du silicium poreux hydrogéné 17 présent dans le premier compartiment 13. Le dihydrogène est ensuite utilisé par l'anode 27 qui produit des électrons via la réaction (II) usuelle.

Parallèlement, l'oxygène pénètre au niveau de la partie cathodique 7 et réagit avec les protons et les électrons issus de la réaction (II) pour produire de l'eau comme représenté schématiquement par la réaction (III).

Ainsi, au fur et à mesure du fonctionnement de la pile 1, la solution NaOH 19 consomme le silicium poreux hydrogéné 17 afin de produire le dihydrogène.

Lorsque la pile 1 arrête de fonctionner par quelconques moyens, le dihydrogène s'accumule dans la zone 50 et pousse la solution NaOH 19 en dessous de la grille 11. La solution Na OH 19 n'est de ce fait, plus en contact avec le silicium poreux hydrogéné 17 et la production de dihydrogène s'arrête.

## Revendications

1. Utilisation d'un silicium hydrogéné sous forme d'un matériau massif ayant au moins une dimension supérieure à 0,5 mm, ledit silicium hydrogéné étant obtenu par un traitement électrochimique d'un substrat de silicium avec un acide, pour fournir du dihydrogène destiné à être récupéré et/ou valorisé, où le silicium hydrogéné est mis en contact avec une solution alcaline.

2. Utilisation selon la revendication précédente où le silicium hydrogéné est poreux.

3. Utilisation selon la revendication précédente où le silicium hydrogéné poreux est constitué de silicium mésoporeux et/ou microporeux.

4. Procédé pour la fabrication de dihydrogène comportant une étape de mise en contact :
- d'un silicium hydrogéné sous forme d'un matériau massif ayant au moins une dimension supérieure à 0,5 mm, ledit silicium hydrogéné étant obtenu par un traitement électrochimique d'un substrat de silicium avec un acide,
- avec une solution alcaline,
ce par quoi on génère du dihydrogène, et
une étape de récupération et/ou de valorisation du dihydrogène ainsi formé.

5. Procédé selon la revendication précédente où le silicium hydrogéné est poreux.

6. Procédé selon la revendication 5, où le silicium hydrogéné poreux est constitué de silicium mésoporeux et/ou microporeux.

7. Procédé selon l'une quelconque des revendications 5 ou 6 où la porosité du silicium hydrogéné est comprise entre 10% et 70% en volume.

8. Procédé selon l'une quelconque des revendications 5 à 7 où la surface spécifique du silicium hydrogéné est comprise entre 200 m².cm⁻³ et 900 m².cm⁻³.

9. Procédé selon la revendication 4, où l'acide est l'acide fluorhydrique.

10. Procédé selon l'une quelconque des revendications 4 à 9, où la solution alcaline est une solution alcaline aqueuse dont le pH est compris entre 9 et 14.

11. Procédé selon la revendication 10, où la solution alcaline aqueuse est une solution aqueuse de NaOH et/ou KOH.

12. Pile à combustible (1) comprenant une anode (27) fonctionnant au dihydrogène associée à un dispositif de fourniture de dihydrogène comportant du silicium hydrogéné (17) mis en contact avec une solution alcaline (19) générant le dihydrogène à partir de silicium hydrogéné (17) en mettant en oeuvre le procédé selon l'une quelconque des revendications 4 à 11, où le dispositif de fourniture de dihydrogène comprend un réservoir (3) pour l'alimentation de l'anode (27), comprenant :
- un premier compartiment (13) rempli en partie ou en totalité par du silicium hydrogéné (17) ;
- un second compartiment (15) rempli en tout ou partie par la solution alcaline (19),
les premier et second compartiments (13, 15) communiquant de telle sorte que la solution alcaline (19) peut venir en contact avec le silicium hydrogéné (17).

13. Pile à combustible (1) selon la revendication 12 où le dispositif de fourniture de dihydrogène comprend un système de chargement de silicium hydrogéné associé à un système de chargement de la solution alcaline.

14. Pile à combustible (1) selon la revendication 13, où le système de chargement de silicium hydrogéné et le système associé de chargement de la solution alcaline sont sous la forme du réservoir (3) tel que défini dans la revendication 12, notamment sous la forme d'un réservoir interchangeable.

## Patentansprüche

1. Verwendung eines hydrierten Siliziums in Form eines massiven Materials, das mindestens eine Abmessung größer als 0,5 mm aufweist, wobei das hydrierte Silizium durch eine elektrochemische Behandlung eines Siliziumsubstrats mit einer Säure erhalten wird, um Dihydrogen zu liefern, das vorgesehen ist, wieder gewonnen und/oder wieder aufbereitet zu werden, wobei das hydrierte Silizium mit einer alkalischen Lösung in Kontakt gebracht wird.

2. Verwendung nach dem vorhergehenden Anspruch, bei dem das hydrierte Silizium porös ist.

3. Verwendung nach dem vorhergehenden Anspruch, wobei das hydrierte poröse Silizium aus mesoporösem Silizium und/oder mikroporösem Silizium besteht.

4. Verfahren zum Herstellen von Dihydrogen, das einen Schritt des Inkontaktbringens:
- eines hydrierten Silizium in Form eines massiven Materials, das mindestens eine Abmessung größer 0,5 mm aufweist, wobei das hydrierte Silizium durch eine elektrochemische Behandlung eines Siliziumsubstrats mit einer Säure erhalten wird,
- mit einer alkalischen Lösung wodurch Dihydrogen erzeugt wird, und
- einen Schritt der Wiedergewinnung und/oder der Wiederaufbereitung des so gebildeten Dihydrogens aufweist.

5. Verfahren nach dem vorhergehenden Anspruch, bei dem das hydrierte Silizium porös ist.

6. Verfahren nach Anspruch 5, bei dem das poröse hydrierte Silizium aus mesoporösem Silizium und/oder mikroporösem Silizium besteht.

7. Verfahren nach einem beliebigen der Ansprüche 5 oder 6, bei dem die Porosität des hydrierten Siliziums zwischen 10 und 70 Volumen-% liegt.

8. Verfahren nach einem beliebigen der Ansprüche 5 oder 7, bei dem die spezifische Fläche des hydrierten Siliziums zwischen 200 m².cm⁻³ und 900 m².cm⁻³ liegt.

9. Verfahren nach Anspruch 4, bei dem die Säure Flusssäure ist.

10. Verfahren nach einem beliebigen der Ansprüche 4 bis 9, bei dem die alkalische Lösung eine wässrige alkalische Lösung ist, deren pH-Wert zwischen 9 und 14 liegt.

11. Verfahren nach Anspruch 10, bei dem bei dem die wässrige alkalische Lösung eine wässrige Lösung von NaOH und/oder KOH ist.

12. Brennstoffzelle (1), eine mit Dihydrogen betriebene Anode (27) umfassend, die einer Vorrichtung zum Liefern von Dihydrogen zugeordnet ist, die hydriertes Silizium (17) aufweist, das mit einer alkalischen Lösung (19) in Kontakt gebracht wird, wobei das Dihydrogen aus dem hydrierten Silizium (17) bei Durchführen des Verfahrens nach einem beliebigen der Ansprüche 4 bis 11 erzeugt wird, wobei die Vorrichtung zum Liefern von Dihydrogen einen Behälter (3) zum Versorgen der Anode (27) umfasst, umfassend:
- eine erste Kammer (13), die teilweise oder insgesamt mit hydriertem Silizium (17) gefüllt ist;
- eine zweite Kammer (15), die insgesamt oder teilweise mit einer alkalischen Lösung (19) gefüllt ist,
wobei die erste und zweite Kammer (13, 15) in der Weise kommunizieren, dass die alkalische Lösung (19) in Kontakt mit dem hydrierten Silizium (17) kommen kann.

13. Brennstoffzelle (1) nach Anspruch 12, bei der die Vorrichtung zum Liefern von Dihydrogen ein System zum Laden von hydriertem Silizium umfasst, das einem System zum Laden der alkalischen Lösung zugeordnet ist.

14. Brennstoffzelle (1) nach Anspruch 13, bei der das System zum Laden des hydrierten Siliziums und das zugeordnete System zum Laden der alkalischen Lösung in Form des Behälters (3), wie im Anspruch 12 definiert ist, insbesondere in Form eines Wechselbehälters ausgebildet sind.

## Claims

1. Use of a hydrogenated silicon in the form of a solid material having at least one dimension greater than at least 0.5 mm, said hydrogenated silicon being obtained by electrochemical treatment of a silicon substrate with an acid, to produce dihydrogen which is to be recovered and/or utilized, wherein the hydrogenated silicon is brought into contact with an alkaline solution.

2. Use according to the preceding claim, wherein the hydrogenated silicon is porous.

3. Use according to the preceding claim, wherein the porous hydrogenated silicon is composed of mesoporous and/or microporous silicon.

4. Method for producing dihydrogen, comprising a step of bringing into contact:
- a hydrogenated silicon in the form of a solid material having at least one dimension greater than at least 0.5 mm, said hydrogenated silicon being obtained by electrochemical treatment of a silicon substrate with an acid,
- with an alkaline solution,
whereby dihydrogen is generated, and
a step of recovering and/or of utilizing the dihydrogen so formed.

5. Method according to the preceding claim, wherein the hydrogenated silicon is porous.

6. Method according to claim 5, wherein the porous hydrogenated silicon is composed of mesoporous and/or microporous silicon.

7. Method according to either claim 5 or claim 6, wherein the porosity of the hydrogenated silicon is from 10% to 70% by volume.

8. Method according to any one of claims 5 to 7, wherein the specific surface area of the hydrogenated silicon is from 200 m².cm⁻³ to 900 m².cm⁻³.

9. Method according to claim 4, wherein the acid is hydrofluoric acid.

10. Method according to any one of claims 4 to 9, wherein the alkaline solution is an aqueous alkaline solution whose pH is from 9 to 14.

11. Method according to claim 10, wherein the aqueous alkaline solution is an aqueous NaOH and/or KOH solution.

12. Fuel cell (1) comprising an anode (27) that operates by means of dihydrogen in association with a dihydrogen-producing device, comprising hydrogenated silicon (17) which is brought into contact with an alkaline solution (19) to generate dihydrogen from hydrogenated silicon (17) by carrying out the method according to any one of claims 4 to 11, wherein the dihydrogen-producing device comprises a reservoir (3) for supplying the anode (27), comprising:
- a first compartment (13) which is partly or completely filled with hydrogenated silicon (17);
- a second compartment (15) which is completely or partly filled with the alkaline solution (19),
the first and second compartments (13, 15) communicating in such a manner that the alkaline solution (19) is able to come into contact with the hydrogenated silicon (17).

13. Fuel cell (1) according to claim 12, wherein the dihydrogen-producing device comprises a hydrogenated silicon supply system associated with an alkaline solution supply system.

14. Fuel cell (1) according to claim 13, wherein the hydrogenated silicon supply system and the associated alkaline solution supply system are in the form of the reservoir (3) as defined in claim 12, especially in the form of an interchangeable reservoir.
